# EUROPÄISCHE PATENTANMELDUNG

(11) **EP 2 293 001 A2**
(43) Veröffentlichungstag der Anmeldung: **09.03.2011**
(21) Anmeldenummer: 10167074.3
(22) Anmeldetag: 23.06.2010
(51) Int. Cl.: F28D 20/02, F28D 1/053

(54) **Wärmeübertrager mit integriertem Kältespeicher**

(30) Priorität: 21.07.2009 DE 102009034303
(71) Anmelder: Behr GmbH & Co. KG, 70469 Stuttgart (DE)
(72) Erfinder: Kästle, Christoph, 70193 Stuttgart (DE); Kohl, Michael, 74321 Bietigheim (DE); Viehrig, Falk, 71069 Sindelfingen (DE); Walter, Christoph, 70469 Stuttgart (DE); Kroner, Peter, 66482 Zweibrücken (DE); Seewald, Wolfgang, 70190 Stuttgart (DE); Link, Joachim, 74395 Mundelsheim (DE)

(57) **Zusammenfassung**

Bei einem Wärmeübertrager (1) zum Durchleiten eines zu kühlenden oder zu erwärmendes Fluides, insbesondere Kältemittelverdampfer (24) einer Kraftfahrzeugklimaanlage mit Kältemittel als zu erwärmendes Fluid, umfassend wenigstens ein Sammelrohr (2, 3), wenigstens ein Rohr (10), insbesondere Flachrohr (11), das mit dem wenigstens einen Sammelrohr (2, 3) verbunden ist, wenigstens einen Kältespeicher (14) mit einem in wenigstens einem Speicherrohr (15) angeordneten Kältespeichermedium, soll der Kältespeicher in der Herstellung preiswert sein.

Diese Aufgabe wird dadurch gelöst, dass das wenigstens eine Speicherrohr (15) ein Falzrohr ist.

## Beschreibung

Die Erfindung betrifft einen Wärmeübertrager gemäß dem Oberbegriff des Anspruches 1, eine Kraftfahrzeugklimaanlage und ein Verfahren zur Herstellung eines Wärmeübertragers gemäß dem Oberbegriff des Anspruches 11.

Kraftfahrzeugktimaanlagen dienen dazu, die dem Innenraum eines Kraftfahrzeuges zuzuführende Luft zu erwärmen und/oder zu kühlen. Die Kraftfahrzeugklimaanlage weist eine Kälteanlage mit einem Kältemittelverdampfer als Wärmeübertrager zum Kühlen der durch die Kraftfahrzeugklimaanlage geleiteten Luft, einen Verdichter, eine Expansionsvorrichtung und einen Kondensator als Wärmeübertrager auf. Der Kältemittelverdampfer wird im Allgemeinen aus Aluminium gefertigt und die Komponenten des Kältemittelverdampfers werden im Allgemeinen mittels Löten in einem Lötofen miteinander verbunden. Dabei weist der Kältemittelverdampfer zwei Sammelrohre auf, die durch eine große Anzahl von Flachrohren fluidleitend miteinander verbunden sind. Zwischen den Flachrohren sind Wellrippen angeordnet, um die Oberfläche zur Übertragung von Wärme zu vergrößern.

Hersteller von Kraftfahrzeugen haben das Ziel, den Kraftstoffverbrauch des Kraftfahrzeuges möglichst gering zu halten bzw. diesen zu reduzieren. Eine Maßnahme zur Reduzierung des Kraftstoffverbrauches ist das Abschalten des Verbrennungsmotors bei vorübergehendem Stillstand, beispielsweise beim Halten an einer Ampel. Dieses vorübergehende Abschalten des Verbrennungsmotors wird auch als Idle-Stop-Betrieb bezeichnet. Der Verdichter der Kraftfahrzeugklimaanlage wird dabei vom Verbrennungsmotor angetrieben. Bei einem Stillstand des Verbrennungsmotors kann deshalb auch der Verdichter der Kraftfahrzeuganlage nicht angetrieben werden, so dass im Idle-Stop-Betrieb die Kraftfahrzeugklimaanlage keine Kälfeleistung zur Verfügung stellen kann. Aus diesem Grund ist es bekannt, am Verdampfer der Kraftfahrzeugklimaanlage einen Kältespeicher anzuordnen, um während des kurzzeitigen Idle-Stopp-Betriebes Kälte zu speichern und abgeben zu können.

Der Kältespeicher mit einem Speicherrohr, in dem ein Kältespeicliermedium angeordnet ist, ist dabei im Allgemeinen an einem Flachrohr des Verdampfers angeordnet. Das Flachrohr und das Speicherrohr werden dabei mittels Extrusion hergestellt. Das extrudierte Flachrohr sowie das extrudierte Speicherrohr müssen dabei in einem aufwendigen Prozess abgelenkt, zusammengesteckt und kalibriert werden. Das Flachrohr und das Speicherrohr werden dabei zunächst separat extrudiert und anschließend zusammengesteckt. Nach dem Zusammenstecken ist das Kalibrieren, d. h. das Ausrichten gegeneinander für geringe Toleranzen, erforderlich. Das Kalibrieren, z. B. ein Ausdehnen, ist erforderlich, weil beim Extrudieren des Flachrohres und des Speicherrohres keine ausreichende Fertigungsgenauigkeit für die geometrische Anordnung des Flachrohres und des Speicherrohres zueinander im verbundenen Zustand möglich ist.

Die Herstellung eines Sammelrohres mit einen Kältespeicher ist damit technisch aufwendig und kostenintensiv. Das Flachrohr kann auch als ein Innenrohr ausgebildet sein, um den das Speicherrohr als Außenrohr angeordnet ist. Bei einer derartigen Anordnung von Flachrohr als Innenrohr und Speicherrohr als Außenrohr stellt die Abstützung des Speicherrohres in einem Abstand zu dem Flachrohr in der Herstellung des Speicherrohres als extrudiertes Rohr ein Problem dar, insbesondere wegen der nicht ausreichenden Fertigungsgenauigkeit beim Extrudieren des Speicherrohres.

Die DE 10 2006 028 017 A1 zeigt einen Wärmeübertrager, insbesondere einen Verdampfer, für eine Kraftfahrzeugklimaanlage, mit einer Mehrzahl nebeneinanderliegend angeordneter, kältemittelführender Rohre und mit wenigstens einem Kältespeicher, in welchem ein Kältespeichermedium angeordnet ist. Der Verdampfer weist dabei zwei parallele zueinander angeordnete Bereiche auf, wobei der erste Bereich in seinem Aufbau einem herkömmlichen Verdampfer entspricht, der Kältespeicher in einem eigenständigen zweiten Bereich angeordnet ist, der von zumindest einem Teil des Kältemittelstromes durchströmbar ist, welcher auch zumindest einen Teil des ersten Bereiches durchströmt und beide Bereiche durch mindestens eine Überstromöffnung miteinander verbunden sind.

Die DE 10 2004 055 340 A1 zeigt eine Klimaanlage für ein Kraftfahrzeug mit einem Kältespeicher in einem Kältemittelkreislauf, der einen Verdampfer aufweist zum Abkühlen von zu konditionierender Luft eines Innenraumes eines Kraftfahrzeuges, In einem Kältespeicher ist ein Kältespeichermedium enthalten, das im Bereich des Verdampfers zwischen Kältemittel führenden Rohren oder Scheiben und/oder Wellerippen angeordnet ist. Der Kältespeicher ist dabei ausschließlich in einem luftaustrittsseitigen Bereich des Verdampfers und beabstandet vom lufteintrittseitigen Bereich des Verdampfers ausgebildet.

Die US 6 854 286 B1 zeigt einen Verdampfer für eine Kraftfahrzeugklimaanlage. Durch als Flachrohre ausgebildete Rohre strömt Kältemittel zum Kühlen von zu konditionierender Luft. Das Kältemittel wird durch an der Ober-und Unterseite angeordnete Sammelrohre in die Flachrohre ein- und ausgeleitet. Dabei ist an einer Seite der Flachrohre jeweils ein Kältespeicher angeordnet. Der Kältespeicher besteht aus einem als Flachrohr ausgebildeten Speicherrohr mit einem darin angeordneten Kältespeichermedium.

Die Aufgabe der vorliegenden Erfindung besteht deshalb darin, einen Wärmeübertrager, eine Kraftfahrzeugklimaanlage und ein Verfahren zur Herstellung einer Kraftfahrzeugklimaanlage zur Verfügung zu stellen, bei der der Kältespeicher in der Herstellung preiswert ist und unterschiedliche geometrische Formen einfach zur Verfügung gestellt werden können. Der Wärmeübertrager und die Kraftfahrzeugklimaanlage sollen im Betrieb zuverlässig arbeiten.

Diese Aufgabe wird gelöst mit einem Wärmeübertrager zum Durchleiten eines zu kühlenden oder zu erwärmenden Fluides, insbesondere Kältemittelverdampfer einer Kraftfahrzeugklimaanlage mit Kältemittel als zu erwärmendes Fluid, umfassend wenigstens ein Sammelrohr, vorzugsweise wenigstens eine Rippe, insbesondere Wellrippe, zur Vergrößerung der Oberfläche des Warmeübertragers, wenigstens ein Rohr, insbesondere Flachrohr, das mit dem wenigstens einen Sammelrohr, insbesondere fluidleitend, verbunden ist, wenigstens einen Kältespeicher mit einem in wenigstens einem Speicherrohr angeordneten Kältespeichermedium, wobei das wenigstens eine Speicherrohr ein Falzrohr ist. Insbesondere ist an beiden Enden des wenigstens einen Rohres wenigstens ein Sammelrohr angeordnet zum Verteilen des Kältemittels durch das wenigstens eine Rohr.

Falzrohre werden durch Umformen eines Rohteils, z. B. einer Platte aus Aluminium, hergestellt. Die Platte aus Aluminium wird dabei so umgeformt, dass sich ein Rohr, z. B. ein im Querschnitt kreisförmiges oder ellipsenförmiges Rohre bildet. Die Enden der gebogenen Platte werden dabei durch Fügen, z. B. Löten oder Schweißen, miteinander verbunden. Vorzugsweise ist dabei die Platte mit einem Lot plattiert, so dass das Fügen mittels Löten in einem Lötofen ausgeführt werden kann. Das Speicherrohr als Falzrohr weist damit auch einen Falz, d. h. die Verbindung der Enden der gebogenen Platte, auf.

Insbesondere ist der Kältespeicher an dem wenigstens einen Rohr angeordnet. Die Wandung des Rohres, insbesondere Flachrohres, steht dabei in thermischem Kontakt zu der Wandung des Speicherrohre, so dass dadurch eine thermische Verbindung zwischen dem Rohr und dem Kältespeicher besteht. Beim Durchleiten von Kältemittel durch das Rohr wird damit von dem Kältemittel das Kältespeichermedium in dem Kältespeicher abgekühlt. Dadurch kann bei einem abgeschalteten Verdichter der Kältespeicher Wärme aufnehmen, auch wenn kein Kältemittel durch das Rohr strömt.

In einer weiteren Ausgestaltung ist in einem Querschnitt das wenigstens eine Rohr wenigstens teilweise, insbesondere vollständig, von dem wenigstens einen Kältespeicher und/oder Speicherrohr umgeben. Ist das Rohr als ein Innenrohr und das Speicherrohr als ein Außenrohr ausgebildet, ist das Rohr vollständig von dem Speicherrohr bzw. dem Kältespeicher umgeben. Abweichend hiervon kann das Rohr als Flachrohr und auch das Speicherrohr als Flachrohre ausgebildet sein. Dabei kann an einer Breitseite des Flachrohre das Speicherrohr angeordnet sein. Die Breite des Speicherrohres kann dabei genauso groß sein wie die Breite des Sammelrohres oder kleiner. Darüber hinaus ist es möglich, dass an beiden Breitseiten des Flachrohre jeweils ein Speicherrohr als Kältespeicher angeordnet ist.

In einer ergänzenden Ausführungsform ist das wenigstens eine Speicherrohr mittels wenigstens eines Abstandselementes in einem Abstand zu dem wenigstens einen Rohr angeordnet zur Ausbildung eines Speichervolumens zwischen dem wenigstens einen Speicherrohr und dem Rohr für das Kältespeichermedium. Mittels des Abstandselementes wird das Speicherrohr zu dem Rohr ausgerichtet und es entsteht ein Speichervolumen zwischen dem Rohr und dem Speicherrohr zur Aufnahme des Kältespeichermediums.

Vorzugsweise ist das wenigstens eine Abstandselement und/oder das wenigstens eine Speicherrohr mittels Umformen, insbesondere Tiefziehen und/oder Streckziehen und/oder Biegen, aus einem Rohteil, insbesondere einer Platte, hergestellt. Insbesondere besteht das Rohteil, insbesondere die Platte aus Metall, insbesondere Aluminium. Das Rohteil kann auch einen gekrümmten Querschnitt aufweisen.

In eine weiteren Ausgestaltung weist das wenigstens eine Speicherrohr einen Falz auf.

In einer Variante sind die beiden Enden des Speicherrohre bzw. der Falz durch Fügen, z. B. Löten und/oder Schweißen und/oder Kleben, miteinander verbunden.

Zweckmäßig ist das wenigstens eine Abstandselement einteilig mit dem wenigstens einen Speicherrohr ausgebildet oder das wenigstens eine Abstandselement ist ein gesondertes Bauteil. Bei einer einteiligen Ausbildung des wenigstens einen Abstandselementes mit dem wenigstens einem Speicherrohr werden das Abstandselement und das Speicherrohr aus einem Rohteil durch Umformen hergestellt. Ist das Abstandselement ein gesondertes Bauteil werden das Abstandselement aus einem ersten Rohteil und das Speicherrohr aus einem zweiten Rohteil gesondert durch Umformen hergestellt.

In eine weiteren Ausführungsform ist das wenigstens eine Speicherrohr mittels wenigstens eines Steges in Teilkammern unterteilt. Die Ausbildung von Stegen in dem Speicherrohr hat den Vorteil, dass der wenigstens eine Steg im Allgemeinen ein hohe Wärmeleitfähigkeit besitzt, weil dieser im Allgemeinen wenigstens teilweise aus Metall gefertigt ist. Dadurch kann Wärme gut von dem Speicherrohr bzw. durch den Kältespeicher zu dem Rohr geleitet werden, das von dem Kältemittel durchströmt ist. Bei der in Inbetriebnahme der Kraftfahrzeugklimaanlage wird dadurch die Luft schneller und besser gekühlt.

In eine weiteren Ausgestaltung liegt der Abstand zwischen zwei Stegen im Bereich zwischen 0,5 und 4 mm, insbesondere zwischen 1 und 3 mm und vorzugsweise zwischen 1,2 und 1,6 mm. Die Dicke der Teilkammern entspricht dem Abstand der Stege, so dass dadurch Teilkammern mit den oben genannten Dicken ergeben. Diese Dicken sind für die Aufnahme des Kältespeichermediums eine optimale Dicke zur Optimierung der chemischen und physikalischen Vorgänge in dem Kältespeicher.

Insbesondere ist der wenigstens eine Steg einteilig mit dem Speicherrohr ausgebildet. Der Steg ist damit Bestandteil des Speicherrohres und somit in gleicher Weise hergestellt wie das Speicherrohr.

In eine weiteren Ausgestaltung fungiert der wenigstens eine Steg als wenigstens ein Abstandselement. Der wenigstens eine Steg dient damit sowohl dazu, einerseits als Abstandselement zu fungieren, d. h. das Speicherrohr in einem Abstand zu dem Rohr auszurichten und andererseits dazu, Teilkammern innerhalb des Speicherrohres zu erzeugen.

Erfindungsgemäßes Verfahren zur Herstellung eines Wärmeübertragers zum Durchleiten eines zu kühlenden oder zu erwärmendes Fluides, insbesondere Kältemittelverdampfer einer Kraftfahrzeugklimaanlage mit Kältemittel als zu erwärmendes Fluid, insbesondere eines in dieser Schutzrechtsanmeldung beschriebenen Wärmeübertragers mit den Schritten: zur Verfügung stellen wenigstens eines Sammelrohres, zur Verfügung stellen wenigstens eines Rohres, insbesondere Flachrohres, Herstellen wenigstens eines Speicherrohres, Befüllen des wenigstens einen Speicherrohres mit einem Kältespeichermedium, vorzugsweise zur Verfügung stellen von Rippen, insbesondere Wellrippen, zur Vergrößerung der Oberfläche des Wärmeübertragers, Verbinden von Komponenten, insbesondere das wenigstens eine Sammelrohr und/oder das wenigstens eine Rohr und/oder das wenigstens einen Speicherrohr, des Wärmeübertragers, vorzugsweise mittels Lot, insbesondere mittels Löten in einem Lötofen, wobei das wenigstens eine Speicherrohr durch Falzen hergestellt, wird und/oder das wenigstens eine Speicherrohr mittels Umformen, insbesondere Tiefziehen und/oder Streckziehen und/oder Biegen, aus einem Rohteil, insbesondere einer Platte, hergestellt wird.

Unter Falzen wird ein Verfahren verstanden, mittels dem ein Falzrohr hergestellt wird. Bei der Herstellung eines Speicherrohres durch Falze wird zunächst ein Rohteil, insbesondere eine Platte zur Verfügung gestellt. Die Platte wird anschließend umgeformt, z. B. mittels Biegen, so dass sich ein Rohr ausbildet. Die Enden des Rohres werden an einem Falz mittels Fügen, insbesondere Löten und/oder Schweißen miteinander verbunden, so dass sich ein fluiddichtes Rohr ausbildet zur Aufnahme eines Fluids.

In einer ergänzenden Variante werden Enden des umgeformten Rohteiles mittels Fügen, insbesondere Löten und/oder Schweißen und/oder Kleben, miteinander verbunden. Die umgeformten Enden des Rohrteiles werden somit an den Enden als Falz durch Fügen miteinander verbunden.

In einer weiteren Variante wird das wenigstens eine Speicherrohr mittels wenigstens eines Abstandselementes in einem Abstand zu dem wenigstens einen Rohr ausgerichtet zur Ausbildung eines Speichervolumens zwischen dem wenigstens einen Speicherrohr und dem Rohr zur Aufnahme eines Kältespeichermediums.

In einer weiteren Ausgestaltung wird das wenigstens eine Abstandselement durch Falzen hergestellt und/oder das wenigstens eine Abstandselemente wird mittels Umformen, insbesondere Tiefziehen und/oder Streckziehen und/oder Biegen und/oder Durchdrücken, und/oder mittels Trennen, insbesondere Bohren und/oder Fräsen und/oder Drehen und/oder Stanzen, aus einem Rohteil, insbesondere einer Platte, hergestellt.

Insbesondere wird das wenigstens eine Abstandselement einteilig mit dem wenigstens einen Speicherrohr hergestellt oder das wenigstens eine Abstandselement wird als gesondertes Bauteil hergestellt und/oder das wenigstens eine Rohr wird mittels Extrudieren hergestellt.

Durch das wenigstens eine Rohr strömt das Kältemittel unter einem hohen Druck, so dass die Herstellung des wenigstens einen Rohres mittels Extrudieren notwendig ist, damit das wenigstens eine Rohr dem hohen Druck Stand hält. Im Speicherrohr mit dem Kältespeichermedium treten keine so hohen Drücke auf wie in dem wenigstens einen Rohr mit dem Kältemittel, so dass dieses preiswert als Falzrohr hergestellt wird.

In einer Variante ist das Speicherrohr ein Flachrohr und der wenigstens eine Steg unterteilt in einem Querschnitt des Speicherrohres das Speicherrohr senkrecht zu einer Richtung der größten Ausdehnung des Querschnittes die Teilkammer, so dass die Teilkammern in der Richtung der größten Ausdehnung des Querschnittes nacheinander angeordnet sind.

In einer weiteren Ausgestaltung umfasst der Wärmeübertrager zwischen wenigstens zwei Rohren angeordnete Rippen, insbesondere Wellrippen, zur Vergrößerung der Oberfläche des Wärmeübertragers.

Insbesondere besteht das wenigstens eine Rohr und/oder das wenigstens eine Sammelrohr und/oder das wenigstens eine Speicherrohr, wenigstens teilweise aus Metall, insbesondere Aluminium, und/oder Kunststoff.

In einer zusätzlichen Variante umfasst das wenigstens eine Abstandselement Pins oder Bolzen, welche zwischen dem wenigstens einen Speicherrohr und dem wenigstens einen Rohr, insbesondere Flachrohr, angeordnet sind zur Beabstandung des wenigstens einen Speicherrohre von dem wenigstens einen Rohr, insbesondere Flachrohr.

Zweckmäßig umfasst das Abstandselement Ausstanzungen oder ist ein Lochblech oder ein Gittergeflecht.

In einer weiteren Ausgestaltung ist das wenigstens eine Speicherrohr und/oder das wenigstens eine Abstandselement mehrteilig, d. h. aus mehreren Rohrteilen zusammengesetzt.

Erfindungsgemäße Kraftfahrzeugklimaanlage, wobei die Kraftfahrzeugklimaanlage wenigstens einen in dieser Schutzrechtsanmeldung beschriebenen Wärmeübertrager umfasst.

Erfindungsgemäßes Verfahren zur Herstellung einer Kraftfahrzeugklimaanlage, wobei ein in dieser Schutzrechtsanmeldung beschriebenes Verfahren zur Herstellung eines Wärmeübertragers ausgeführt wird.

In einer weiteren Ausgestaltung umfasst die Kraftfahrzeugklimaanlage einen Kältemittelverdampfer und/oder eine Luftklappe und/oder ein Gebläse und/oder eine Heizvorrichtung zum Erwärmen der Luft und/oder einen Luftfilter und/oder einen Verdichter und/oder einen Kondensator als Wärmeübertrager.

Im Nachfolgenden werden Ausführungsbeispiele der Erfindung unter Bezugnahme auf die beigefügten Zeichnungen näher beschrieben. Es zeigt:
- Fig. 1: eine Vorderansicht eines Wärmeübertragers in einem ersten Ausführungsbeispiel,
- Fig. 2: eine perspektivische Ansicht des Wärmeübertragers gemäß. Fig. 1,
- Fig. 3: einen Querschnitt eines Flachrohres und eines Kältespeichers des Wärmeübertragers gemäß Fig. 1,
- Fig. 4: einen Teillängsschnitt des Wärmeübertragees gemäß Fig. 1 im Bereich eines Sammelrohres,
- Fig. 5: einen Querschnitt des Flachrohres und des Kältespeichers des Wärmeübertragers in einem zweiten Ausführungsbeispiel,
- Fig. 6: einen Querschnitt des Flachrohres und des Kältespeichers des Wärmeübertragers in einem dritten Ausführungsbeispiel,
- Fig. 7: einen Querschnitt des Flachrohres und des Kältespeichers des Wärmeübertragers in einem vierten Ausführungsbeispiel,
- Fig. 8: einen Querschnitt des Flachrohre und des Kältespeichers des Wärmeübertragers in einem fünften Ausführungsbeispiel,
- Fig. 9: einen Querschnitt des Flachrohre und des Kältespeichers des Wärmeübertragers in einem sechsten Ausführungsbeispiel,
- Fig. 10: einen Querschnitt eines Falzes in einem ersten Ausführungsbeispiel und
- Fig. 11: einen Querschnitt des Falzes in einem zweiten Ausführungsbeispiel.

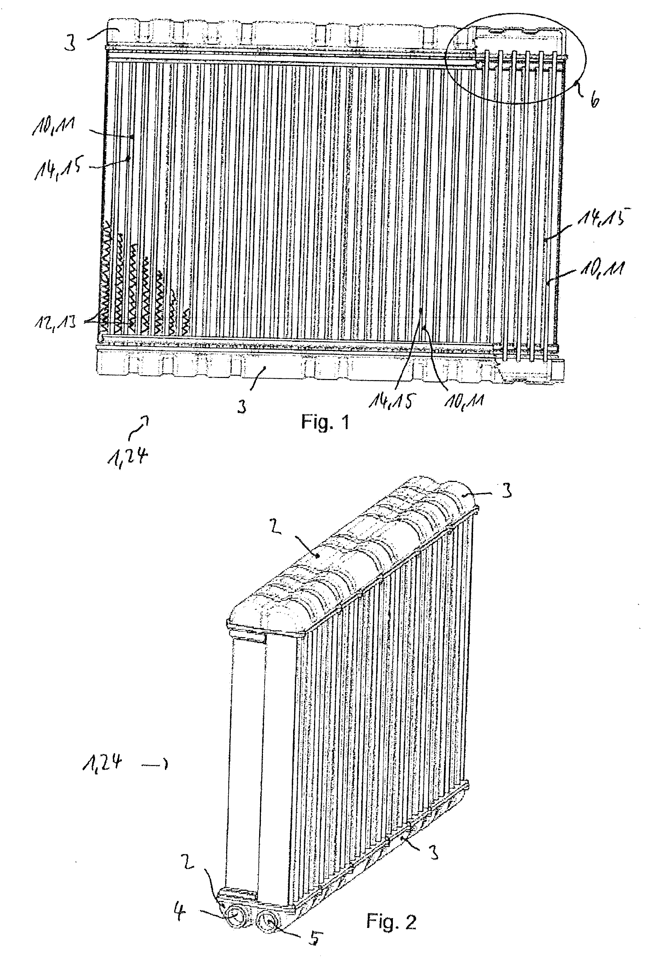

In Fig. 1 und 2 ist ein Wärmeübertrager 1 eine Kraftfahrzeugklimaanlage dargestellt. Der Wärmeübertrager 1 ist ein Kältemittelverdampfer 24 und dient zum Kühlen von Luft. Die zu kühlende Luft wird durch ein Gehäuse der Kraftfahrzeugklimaanlage geleitet, in dem der Wärmeübertrager 1 angeordnet ist (nicht dargestellt).

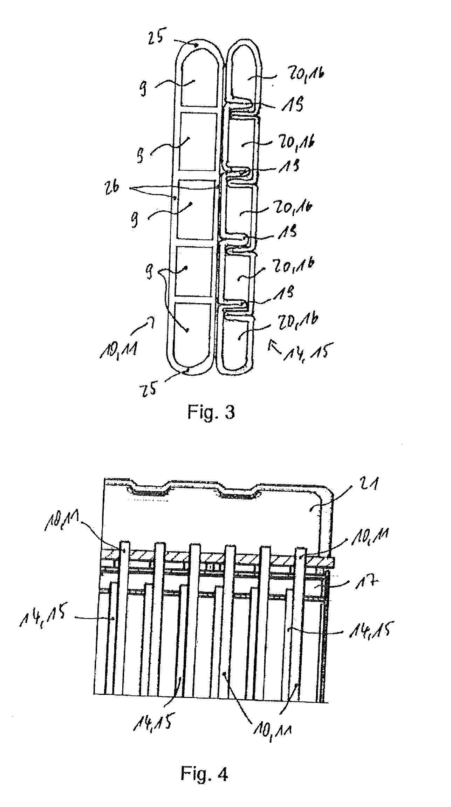

Der Wärmeübertrager 1 weist an der Oberseite ein erstes Sammelrohr 2 und ein zweites Sammelrohr 3 auf. In analoger Weise ist der Wärmeühertrager 1 auch an der Unterseite mit einem ersten Sammelrohr 2 und einem zweiten Sammelrohr 3 versehen. In der Darstellung in Fig. 2 ist an dem ersten Sammelrohr 2 eine Eintrittsöffnung 4 zum Einleiten von Kältemittel und an dem zweiten Sammelrohr 3 eine Austrittsöffnung 5 zum Ausleiten des Kältemittels angeordnet. Vorzugsweise kann durch nicht dargestellte Verbindungsausnehmungen Kältemittel von dem ersten Sammelrohr 2 zu dem zweiten Sammelrohr 3 geleitet werden. Die beiden oberen Sammelrohr 2, 3 und die beiden unteren Sammelrohre 2, 3 sind dabei fluidleitend durch als Flachrohre 11 ausgebildete Rohre 10 miteinander verbunden. Durch die Flachrohre 11 strömt das Kältemittel. Die Flachrohre 11 weisen dabei eine Breitseitenwandung 26 und eine Schmalseitenwandung 25 auf. In der Darstellung in Fig. 1 steht dabei die Breitseitenwandung 26 senkrecht auf der Zeichenebene von Fig. 1 und die Schmalseitenwandung 25 ist dabei im Wesentlichen parallel zur Zeichenebene von Fig. 1. An einer Breitseitenwandung 26 der Flachrohre 11 ist dabei ein Kältespeicher 14 ausgebildet (Fig. 1 und 3). Der Kältespeicher 14 umfasst ein Speicherrohr 15, das ein Speichervolumen 16 einschließt, Dabei ist an jedem der Flachrohre 11 je ein Speicherrohr 15 angeordnet. In dem Speichervolumen 16 ist ein Kältespeichermedium angeordnet.

In Fig. 1 ist der Wärmeübertrager 1 oben rechts und unten rechts nicht in einer Vorderansicht, sondern in einem Längsschnitt dargestellt. Der in Fig. 1 mit einer Ellipse 6 eingekreiste Längsschnitt ist in detaillierter Darstellung in Fig. 4 abgebildet.

Als Käftespeichermedium handelt es sich bevorzugt um ein PCM-Material (phase change material), das bevorzugte kongruent schmelzend Medien, insbesondere Decanol, Tetra-, Penta- oder Hexadecan, LiClO₃·H₂O, wässriges Salzlösungen oder organische Hydrate enthält oder hieraus gebildet ist. Im Kältespeichermedium können auch Keimbildner vorgesehen sein, welche die Kristallbildung beschleunigen. Die Phasenumwandlungstemperatur des Kältespeichermediums zwischen einem flüssigen und festen Zustand liegt vorzugsweise in einem Bereich von 0 und 30°C, insbesondere zwischen und 2 und 15°C und ganz insbesondere zwischen 4 und 12°C sowie beispielsweise im Bereich von 10°C.

Zwischen den Flachrohre 11 mit dem Kältespeicher 14 sind als Wellrippen 13 ausgebildete Rippen 12 angeordnet (Fig. 1). Die Wellrippen 13 sind nur in Fig. 1 und hier auch nur teilweise dargestellt. Die Wellrippen 13 haben die Aufgabe, die Oberfläche des Wärmeübertragers 11 zu erhöhen, welche zur Verfügung steht, um die Luft zu kühen, welche durch den Wärmeübertrager 1 geleitet wird. Dabei wird die zu kühlende Luft in einer Richtung durch den Wärmeübertrager 1 geleitet, die senkrecht auf der Zeichenebene von Fig. 1 steht.

Das Flachrohr 11 ist ein Extrusionsrohr, d. h. das Flachrohr 11 wird mittels Extrusion hergestellt, vorzugsweise mit dem Werkstoff Metall, insbesondere Aluminium.

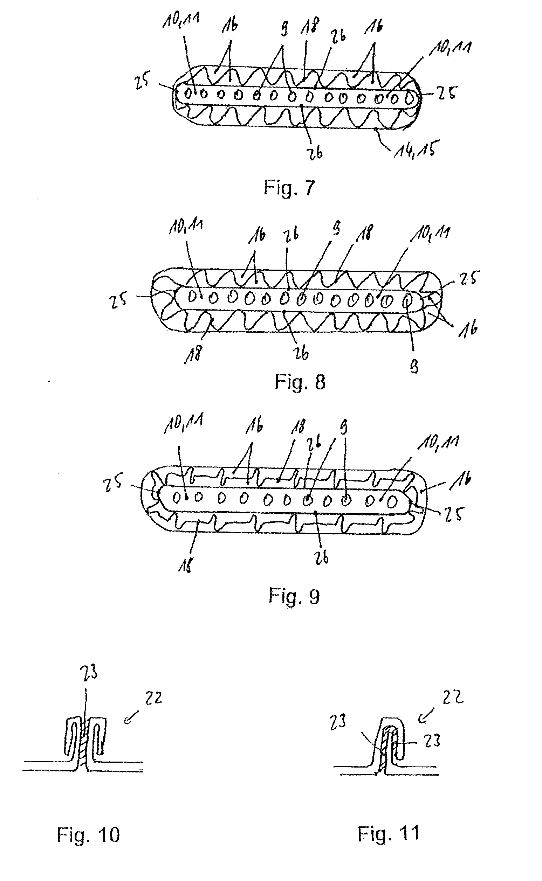

Das Speicherrohr 15 ist ein Falzrohr. Ein Falzrohr wird mittels Falzen hergestellt. Dabei wird aus einem Rohteil, insbesondere einer Platte, vorzugsweise aus Metall, insbesondere Aluminium, das Speicherrohr 15 hergestellt, indem die Platte umgeformt, insbesondere gebogen wird. Das Herstellern des Speicherrohres 15 als Falzrohr bzw. mittels Falzen wirkt sich auch auf die konstruktiven bzw. strukturellen Merkmale des Speicherrohres 15 aus. Ein Speicherrohr 15, das ein Falzrohr ist, weist im Allgemeinen einen Falz 22 (Fig. 10 und 11) auf. Das Speicherrohr 15 ist mit Stegen 19 versehen, die das Speicherrrohr 15 in Teilkammern 20 unterteilen zur Aufnahme des Kältespeichermediums. Die Stege 19 als Bestandteil des Speicherrohres 15 sind dabei einteilig aus dem Rohteil bzw. der Platte hergestellt, so dass die Stege 19 lediglich Ausstülpungen oder Umformungen des ursprünglich ebenen Rohteils bzw. der Platte darstellen. Dies geht aus dem Querschnitt in Fig. 3 hervor. Der Abstand zwischen zwei Stegen des Speicherrohrs 15 in Fig. 3, d. h. die Dicke oder die Höhe der Teilkammern 20, beträgt dabei ungefähr 1,4 bis 1,5 mm. Dadurch können die physikalischen und chemischen Vorgänge zur Speicherung von Wärme bzw. Kälte in dem Kältespeicher 14 optimiert werden. Die Stege 19 aus dem gut leitende Metall Aluminium haben den Vorteil, dass bei einem eingeschalteten Verdichter der Krafffahrzeugklimaanlage (nicht dargestellt) das durch Kanäle 9 des Flachrohres 11 strömende Kältemittel Wärme sowohl an der in Fig. 3 links dargestellten Breitseitenwandung 26 als auch in der in Fig. 3 rechts dargestellten Breitseitenwandung 26 mit dem Kältespeicher 14 aufnehmen kann, weil die Stege 19 die Wärme gut durch den Kältespeicher 14 leiten können.

In einem nicht dargestellten Ausführungsbeispiel ist auch eine Anbindung des Kältespeichers 14 an beiden Seiten 26 des Flachrohres 11 denkbar, wobei das Speicherrohr 15 als Falzrohr oder als extrudiertes Rohr ausgeführt sein kann.

In Fig. 4 ist ein Teilschnitt des Wärmeübertragers 1 gemäß Fig. 1 im Bereich des Sammelrohres 21 dargestellt. Fig. 4 zeigt dabei lediglich einen oberen Abschnitt des Wärmeübertragers 1 mit nur einem Sammelrohr 21 an der Oberseite. Die Flachrohre 11 münden dabei in das Sammelrohr 21 und die Speicherrohre 15 mit dem Kältespeichermedium münden in ein Verbindungsrohr 17 für die Speicherrohre 15. Die Enden der Speicherrohre 15 sind nicht verschlossen, so dass eine fluidleitende Verbindung zwischen den Speicherrohren 15 und dem Verbindungsrohr 17 mit dem Kältespeichermedium besteht. Zwischen dem Sammelrohr 21 und dem Verbindungsrohr 17 besteht ein Abstand. Dadurch kann aufgrund von Undichtigkeiten in dem Sammelrohr 21 austretendes Kältemittel nicht in das Kältespeichermedium gelangen. Undichtigkeiten, z. B. an den Ausnehmungen in dem Sammelrohr 21 in denen die Flachrohre 11 angeordnet sind, leiten damit austretendes Kältemittel in die Umgebung des Wärmeübertragers 1 und nicht in das Kättespeichermedium des Kältespeichers 14. In Fig. 4 sind zwischen den Flachrohren 11 und den Kältespeichern 14 angeordneten Wellrippen 13 nicht abgebildet.

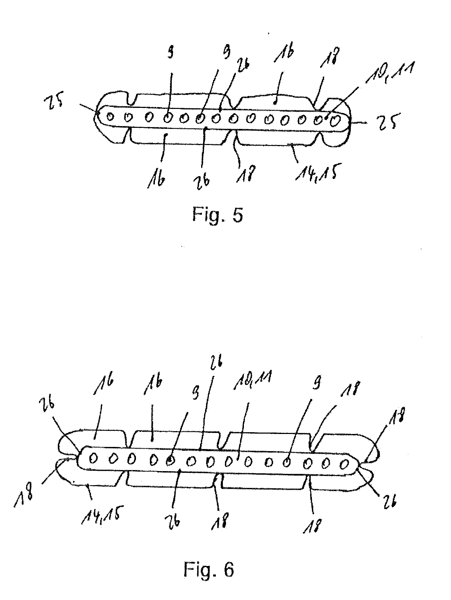

In Fig. 5 ist ein zweites Ausführungsbeispiel des Flachrohres 11 und des Kältespeichers 14 dargestellt. Das Flachrohr 11 ist ein extrudiertes Rohr mit Kanälen 9 zum Durchleiten des Kältemittels. Das Flachrohr 11 ist dabei vollständig von dem Speicherrohr 15 umschlossen, da das Flachrohr 11 ein Innenrohr ist und das Speicherrohr 15 ein Außenrohr zu dem Flachrohr 11 als Innenrohr ist. Das Speicherrohr 15 ist ein Falzrohr und weist Abstandselemente 18 auf. Mittels der Abstandselemente 18 wird das Speicherrohr 15 in einer bestimmten Position bzw. Geometrie zu dem Flachrohr 11 ausgerichtet. Zwischen dem Speicherrohr 15 und dem Flachrohr 11 bildet sich somit das Speichervolumen 16 aus, in dem das Kältespeichermedium angeordnet ist. Im Bereich der Schmalseitenwandung 25 des Flachrohres 11 bzw. der Radien im Querschnitt des Flachrohres 11 sind keine Abstandselemente 18 an dem Speicherrohr 15 vorhanden. Dadurch kontaktiert die Außenwandung des Speicherrohres 15 unmittelbar die Schmalseitenwandung 25 des Fachrohres 11. Das Flachrohr 11 ist mittels Extrusion hergestellt und das Speicherrohr 15 ist ein Falzrohr. Zur Verbindung des Flachrohres 11 mit dem Speicherrohr 15 sind sowohl das Flachrohr 11 als auch das Speicherrohr 15 mit einem Lot 23 plattiert. Nach dem Ineinanderschieben bzw. dem Einschieben des Flachrohr 11 in das Speicherrohres 15 werden das Flachrohr 11 und das Speicherrohres 15 in einen Lötofen eingebracht, so dass beide an den Kontaktstellen miteinander verlötet werden.

Das in Fig. 6 dargestellte dritte Ausführungsbeispiel unterscheidet sich von dem zweiten Ausführungsbeispiel gemäß Fig. 5 lediglich nur dadurch, dass das Speicherrohr 15 auch im Bereich der Breitseitenwandung 16 des Flachrohres 11 Abstandselemente 18 aufweist.

In den Fig. 7 bis 9 ist ein viertes, fünftes und sechstes Ausführungsbeispiel des Flachrohres 11 und des Kältespeichers 14 dargestellt. In dem zweiten und dritten Ausführungsbeispiel gemäß Fig. 5 und 6 ist das Abstandselement 18 Bestandteil des Speicherrohre 15 und einteilig mit diesem hergestellt. Anders in den Ausführungsbeispielen vier, fünf und sechs; hier sind das Speicherrohr 15 und das Abstandselement 18 gesonderte getrennt hergestellte Bauteile. Dabei ist das Abstandselement 18 in analoger Weise zu dem Speicherrohr 15 mittels Falze hergestellt bzw. ein Falzrohr. Das ebenfalls aus Aluminium bestehende Abstandselement 18 ist dabei zwischen dem Speicherrohr 15 und dem Flachrohr 11 angeordnet, so dass das Speicherrohr 15 in einem Abstand zu dem Flachrohr 11 ausgerichtet ist und sich dadurch ebenfalls ein Speichervolumen 16 für das Käitespeichermedium ausbildet.

Im vierten Ausführungsbeispiel gemäß Fig. 7 sind im Bereich der Schmalseitenwandung 25 des Flachrohres 11 im Wesentlichen keine Abstandselemente angeordnet, weil das die Abstandselemente 18 bildende Rohr eine entsprechende Geometrie aufweist, so dass im Bereich der Schmalseitenwandung 25 des Flachrohre 11 der Abstand zwischen dem Speicherrohr 15 und der Schmalseitenwandung 25 des Flachrohres 11 im Wesentlichen nur der Dicke der Wandung des Rohres darstellt, das die Abstandselemente 18 bildet. In dem fünften Ausführungsbeispiel gemäß Fig. 8 sind auch im Bereich der Schmalseitenwandung 25 des Flachrohre 11 Abstandselemente mit einer Geometrie vorhanden, so dass dadurch der Abstand des Speicherrohres 15 zu der Schmalseitenwandung 25 des Flachrohres 11 wesentlich größer ist als die Dicke des Rohres, welche die Abstandselemente 18 bildet. Dies gilt analog auch für das sechste Ausführungsbeispiel gemäß Fig. 9. Im sechsten Ausführungsbeispiel weisen die Abstandselemente 18 eine andere Geometrie auf als die Abstandselemente 18 in dem vierten und fünften Ausführungsbeispiel.

In Fig. 10 und 11 sind zwei Ausführungsbeispiele eines Falzes 22 dargestellt. Bei der Herstellung eines Falzrohres, z. B. des Speicherrohres 15 oder des Rohres zur Ausbildung der Abstandselemente 18, wird eine Platte aus Aluminium durch Biegen zu einem Rohr umgeformt. Die Enden dieser Platte müssen dabei miteinander verbunden werden, so dass sich ein fluiddichtes Rohr ausbildet. Diese Enden werden dabei mittels eines Falzes 22 mit einer bestimmten Geometrie, die beispielhaft in Fig. 10 und 11 dargestellt ist, miteinander verbunden. Dabei ist die Platte aus Aluminium mit einem Lot plattiert, so dass im Bereich der Falze 22 die Enden der Platte mittels Lot in einem Lötofen miteinander verlötet werden können. Das Lot 23 ist in Fig. 10 und 11 strichliert dargestellt. Die Enden der Platte können dabei anstelle von Löten mittels Lot 23 auch durch Schweißen miteinander verbunden werden.

Insgesamt betrachtet sind mit dem erfindungsgemäßen Wärmeübertrager 1 und der erfindungsgemäßen Kraftfahrzeugklimaanlage wesentliche Vorteile verbunden. Das Speicherrohr 15 zur Ausbildung des Kältespeichers 14 ist ein Falzrohr. Dadurch können die Herstellungskosten für das Speicherrohr 15 gesenkt werden und Probleme der Kalibrierung des Speicherrohres 15 zu dem Flachrohr 11 bzw. dem Rohr 10 vermieden werden.

### Bezugszeichenliste

- 1: Wärmeübertrager
- 2: Erstes Sammelrohr
- 3: Zweites Sammelrohr
- 4: Eintrittsöffnung
- 5: Austrittsöffnung
- 6: Ellipse
- 7: -
- 8: -
- 9: Kanal
- 10: Rohr
- 11: Flachrohr
- 12: Rippe
- 13: Wellrippe
- 14: Kältespeicher
- 15: Speicherrohr
- 16: Speichervolumen
- 17: Verbindungsrohr für Speicherrohr
- 18: Abstandselement
- 19: Steg
- 20: Teilkammer
- 21: Sammelrohr
- 22: Falz
- 23: Lot
- 24: Kältemittelverdampfer
- 25: Schmalseitenwandung
- 26: Breitseitenwandung

## Patentansprüche

1. Wärmeübertrager (1) zum Durchleiten eines zu kühlenden oder zu erwärmendes Fluides; insbesondere Kältemittelverdampfer (24) einer Kraftfahrzeugklimaanlage mit Kältemittel als zu erwärmendes Fluid, umfassend
- wenigstens ein Sammelrohr (2, 3, 21),
- wenigstens ein Rohr (10), insbesondere Flachrohr (11), das mit dem wenigstens einen Sammelrohr (2, 3, 21) verbunden ist,
- wenigstens einen Kältespeicher (14) mit einem in wenigstens einem Speicherrohr (15) angeordneten Kältespeichermedium,
**dadurch gekennzeichnet, dass**
das wenigstens eine Speicherrohr (15) ein Falzrohr ist.

2. Wärmeübertrager nach Anspruch 1, **dadurch gekennzeichnet, dass** der Kältespeicher (14) an dem wenigstens einen Rohr (10) angeordnet ist.

3. Wärmeübertrager nach Anspruch 1 oder 2, **dadurch gekennzeichnet, dass** in einem Querschnitt das wenigstens eine Rohr (10) wenigstens teilweise, insbesondere vollständig, von dem wenigstens einen Kältespeicher (14) und/oder Speicherrohr (15) umgeben ist.

4. Wärmeübertrager nach einem oder mehreren der vorhergehenden Ansprüche, **dadurch gekennzeichnet, dass** das wenigstens eine
Speicherrohr (15) mittels wenigstens einen Abstandselementes (18) in einem Abstand zu dem wenigstens einen Rohr (10) angeordnet ist zur Ausbildung eines Speichervolumens (16) zwischen dem wenigstens einen Speicherrohr (15) und dem Rohr (10) für das Kältespeichermedium.

5. Wärmeübertrager nach einem oder mehreren der vorhergehenden Ansprüche, **dadurch gekennzeichnet, dass** das wenigstens eine Abstandselement (18) und/oder das wenigstens eine Speicherrohr (15) mittels Umformen, insbesondere Tiefziehen und/oder Streckziehen und/oder Biegen, aus einem Rohteil, insbesondere einer Platte, hergestellt ist.

6. Wärmeübertrager nach Anspruch 4 oder 5, **dadurch gekennzeichnet, dass** das wenigstens eine Abstandselement (18) einteilig mit dem wenigstens einen Speicherrohr (15) ausgebildet ist oder das wenigstens eine Abstandselement (18) ein gesondertes Bauteil ist.

7. Wärmeübertrager nach einem oder mehreren der vorhergehenden Ansprüche, **dadurch gekennzeichnet, dass** das wenigstens eine Speicherrohr (15) mittels wenigstens eines Steges (19) in Teilkammern (20) unterteilt ist.

8. Wärmeübertrager nach Anspruch 7, **dadurch gekennzeichnet, dass** der wenigstens eine Steg (19) einteilig mit dem Speicherrohr (15) ausgebildet ist.

9. Wärmeübertrager nach Anspruch 7 oder 8, **dadurch gekennzeichnet, dass** der wenigstens eine Steg (19) als wenigstens ein Abstandselement (18) fungiert.

10. Kraftfahrzeugktimaanfage, **dadurch gekennzeichnet, dass** die Kraftfahrzeugklimaanlage wenigstens einen Wärmeübertrager (1) gemäß einem oder mehrerer der vorhergehenden Ansprüche umfasst.

11. Verfahren zur Herstellung eines Wärmeübertragers (1) zum Durchleiten eines zu kühlenden oder zu erwärmendes Fluides, insbesondere Kältemittelverdampfer (24) einer Kraftfahrzeugklimaanlage mit Kältemittel als zu erwärmendes Fluid, insbesondere eines Wärmeübertragers (1) gemäß einem oder mehrerer der vorhergehenden Ansprüche, mit den Schritten:
- zur Verfügung stellen wenigstens eines Sammelrohres (2, 3, 21),
- zur Verfügung stellen wenigstens eines Rohres (10), insbesondere Flachrohres (11),
- Herstellen wenigstens eines Speicherrohres (15),
- Befüllen des wenigstens einen Speicherrohres (15) mit einem Kältespeichermedium,
- Verbinden von Komponenten (2, 3, 7, 10, 11, 12, 13, 15), insbesondere das wenigstens eine Sammelrohr (2, 3, 21) und/oder das wenigstens eine Rohr (10) und/oder das wenigstens einen Speicherrohr (15), des Wärmeübertragers (1), vorzugsweise mittels Lot, insbesondere mittels Löten in einem Lötofen,
**dadurch gekennzeichnet, dass**
das wenigstens eine Speicherrohr (15) durch Falzen hergestellt wird und/oder das wenigstens eine Speicherrohr (15) mittels Umformen, insbesondere Tiefziehen und/oder Streckziehen und/oder Biegen, aus einem Rohteil, insbesondere einer Platte, hergestellt wird.

12. Verfahren nach Anspruch 11, **dadurch gekennzeichnet, dass** Enden des umgeformten Rohteiles mittels Fügen, insbesondere Löten und/oder Schweißen und/oder Kleben, miteinander verbunden werden.

13. Verfahren nach Anspruch 11 oder 12, **dadurch gekennzeichnet, dass** das wenigstens eine Speicherrohr (15) mittels wenigstens einen Abstandselementes (18) in einem Abstand zu dem wenigstens einen Rohr (10) ausgerichtet wird zur Ausbildung eines Speichervolumens (16) zwischen dem wenigstens einen Speicherrohr (15) und dem Rohr (10) zur Aufnahme eines Kältespeichermediums.

14. Verfahren nach Anspruch 13, **dadurch gekennzeichnet, dass** das wenigstens eine Abstandselement (18) durch Falzen hergestellt wird und/oder das wenigstens eine Abstandselement (18) mittels Umformen, insbesondere Tiefziehen und/oder Streckziehen und/oder Biegen und/oder Durchdrücken, und/oder mittels Trennen, insbesondere Bohren und/oder Fräsen und/oder Drehen und/oder Stanzen, aus einem Rohteil, insbesondere einer Platte, hergestellt wird.

15. Verfahren nach Anspruch 13 oder 14, **dadurch gekennzeichnet, dass** das wenigstens eine Abstandselemente (18) einteilig mit dem wenigstens einen Speicherrohr (15) hergestellt wird oder das wenigstens eine Abstandselement (18) als gesondertes Bauteil hergestellt wird und/oder das wenigstens eine Rohr (10) mittels Extrudieren hergestellt wird.
